# EUROPEAN PATENT APPLICATION

(11) **EP 3 021 617 A1**
(43) Date of publication of application: **18.05.2016**
(21) Application number: 14193304.4
(22) Date of filing: 14.11.2014
(51) Int. Cl.: H04W 48/20, H04W 76/02

(54) **Method for operating a wireless communication device in a cellular network**

(71) Applicant: Gemalto M2M GmbH, 81541 München (DE)
(72) Inventor: Breuer, Volker, 16727 Boetzow (DE); Wehmeier, Lars, 14612 Falkensee (DE)
(74) Representative: Grevin, Emmanuel

(57) **Abstract**

The present invention relates to a method for operating a wireless communication device in a cellular network, comprising a plurality of cells, each comprising a base node, the cellular network further comprising an active cell, which is the one of the plurality of cells the wireless communication device is camping on, the active cell being part of one of two or more radio access networks of the cellular network, the cellular network further comprising at least one device domain, and an assignment of registered wireless communication devices to said device domain, said wireless communication device being assigned to said device domain, the method comprising the steps for the wireless communication device of:
- determining measurements related to received signal quality of the base node of at least one cell of the cellular network,
- submitting to the base node of the active cell said measurements and a request for a service of the cellular network,
the method further comprising the steps for the cellular network of:
- submitting to the wireless communication device an instruction relating to the use of at least one of said radio access network, the instruction being at least based on:
- the device domain, the wireless communication device is assigned to and
- the measurements received from the wireless communication device, further at the wireless communication device:
- selecting after reception of said instruction a cell for the requested service, based on received instruction.

## Description

### FIELD OF THE INVENTION

The present invention relates to a method for operating a wireless communication device in a cellular network.

The invention also pertains to a wireless communication device using said method. The invention further relates to a cellular network using said method.

### BACKGROUND OF THE INVENTION

Generally, in the area of wireless communication cellular networks are facing new threats in terms of overload. This is in particular due to the growing use of machine-type-communication, that is machines or other devices with the capability of sending and/or receiving by using said cellular networks without direct human control.

Today's cellular networks are in terms of capacity planning mainly designed for mobile handset, that is manually operated devices which follow a certain daily curve of occupation of network resources. Typically with the growing use of machine-type-communication devices - including applications running on handsets that comprise automated signaling behavior - the capacity planning gets inappropriate and risks the stability of the cellular networks. Moreover a good share of the signaling load from the machine-type-communication does not provide payload, but is only dedicated for maintaining connections, registrations etc. That results in a situation where the growth in signaling load does not coincide with higher revenue from increased network usage, which revenue could be used by the network operators for increasing the capacity of the cellular networks.

As a main task of the capacity planning the cellular networks provide a balancing mechanism, sending wireless communication devices to different radio access networks. The general goal of those measures is that with low occupancy each registered wireless communication device is operating in the highest possible radio access network, e.g. 4G rather than 3G etc. If a certain radio access network reaches a certain load level, it gets blocked for new devices.

This strategy can lead to the situation that such blocked wireless communication devices are not capable to fulfill their service requests at all, in particular regular sending or receiving a certain amount of data.

Other solutions for load reductions lead in the direction of reduced paging periodicity or increasing DRX cycle. Nevertheless those approaches do not materially solve the problem but only reduce the impact.

It is therefore a goal of present invention to provide a method that reduces the impact of wireless communication devices in cellular networks. Further alternative and advantageous solutions would, accordingly, be desirable in the art.

### SUMMARY OF THE INVENTION

The present invention aims to reach that goal by a method for operating a wireless communication device according to claim 1. The invention also relates to a wireless communication device operating in cellular network according to claim 9. Further the invention relates to a cellular network according to claim 12.

It is therefore according to a first aspect of the invention proposed a method for operating a wireless communication device in a cellular network, comprising a plurality of cells, each comprising a base node, further an active cell, which is the one of the plurality of cells the wireless communication device is camping on, the active cell being part of one of two or more radio access networks of the cellular network, the cellular network further comprising at least one device domain, and an assignment of registered wireless communication devices to said device domain, said wireless communication device being assigned to said device domain,
the method comprising the steps for the wireless communication device of:
- determining measurements related to received signal quality of the base node of at least one cell of the cellular network,
- submitting to the base node of the active cell said measurements and a request for a service of the cellular network,
the method further comprising the steps for the cellular network of:
- submitting to the wireless communication device an instruction relating to the use of at least one of said radio access network, the instruction being at least based on:
- the device domain, the wireless communication device is assigned to and
- the measurements received from the wireless communication device, further at the wireless communication device:
- selecting after reception of said instruction a cell for the requested service, based on received instruction.

According to the proposed method the wireless communication device is camping on a base node of the cellular network, which comprises the active cell. The cellular network comprises a plurality of radio access networks, and the base node of the active cell is assigned to one of the radio access networks. Further the wireless communication device is part of the device domain.

The inventive method starts with the measurement through the wireless communication device of the signal quality and/or power of base nodes of the cellular network, where the active cell belongs to. This is in particular supported by the exploitation of the list of neighbor cells of the active cell. As a result of this step, for each of the measured cells resp. base nodes at least one value relative to signal quality is determined.

In the next step at least one measured value is submitted to the base node of the active cell. Preferably the base node forwards such measurements to further components of the radio access network or the cellular network it belongs to. Further the wireless communication device provides to the base node a request for a service of the cellular network, like setting up a voice call or connecting to a remote server in order to set up an IP connection. According to a first variant the service request incorporates the measurements, alternatively both messages to the base node are separated. In particular it is foreseen that the measurements are sent with one request, and the subsequent request for a service leads in response, taking into account the measurements, to an instruction from the cellular network relating the use of a radio access network.

Hence in the next step, the cellular network decides about instructions for the wireless communication device where it is supposed to operate, in particular for the requested service. This decision is based on a couple of parameters. At first it is checked, if the wireless communication device is assigned to a device domain. The assignment to the device domain indicates the cellular network to deviate from the known technology standard defined network balancing schemes. This is advantageous as only for devices assigned to the device domain, in particular a machine-to-machine related device domain, the known balancing mechanisms are not appropriate.

It is then checked the measurements received from the wireless communication device. The measurements indicate to the cellular network which base nodes are reachable at all for the wireless communication device. In particular the cellular network is able to deduct from these measurements if base nodes operating in different radio access networks than the active cell, in particular those supporting lower technology standards, are decodable for the wireless communication device. This assures that the cellular network only submits an instruction to the wireless communication device preferably including a blocking command regarding a radio access network and/or its cell, when there is still at least one cell available which allows the wireless communication device to operate, in particular in the requested service. When the decision about instructions is made, a message comprising the instruction is submitted to the wireless communication device. It is in a preferred embodiment foreseen that this message is part of the response to the service requests.

When after reception of said instruction the wireless communication device is about to launch the envisaged service, it first has to comply with the instructions. That means that in case the instructions comprise a blocking command for a radio access network, in particular the one of the active cell, the wireless communication device has first to do a reselection in direction of one of the cells in reach belonging to a radio access network not affected by the blocking command. For that reselection operation preferably methods are used known from the technology standards for 2G, 3G etc.

In a further advantageous embodiment it is proposed a method wherein the instruction is further based on at least one out of
- type of the requested service,
- the service capabilities of the radio access network of the active cell, and/or
- the service capabilities of at least one cell being part of a radio access network different from the radio access network of the active cell.

According to this embodiment additional parameter are taken into account at the cellular network to make the decision regarding instructions to be sent to the wireless communication device. This embodiment is in particular advantageous in case the wireless communication device provides said measurements to the cellular network in conjunction with a service request. This does not necessarily mean that this is done in one message, but at least in a defined time wise relationship.

With the service request the cellular network knows what type of service the wireless communication device is about to launch after receiving a response to the service request. The cellular network is therefore prepared to analyze the received measurements in that sense, that at least one cell of a lower technology radio access network than the active cell must be available which is able to support the requested service.

If the active cell is not able to support the requested service, e.g. an LTE cell does not provide voice capabilities, then it is also advantageous to take this into account for the decision about the instructions to be sent to the wireless communication device.

This embodiment is an additional support for the requirement to combine the desired balancing with a nevertheless uninterrupted service for wireless communication devices belonging to said device domain.

According to another preferred embodiment it is suggested a method wherein the cellular network further comprising at least one radio access point related to a radio access network, wherein said instruction comprises a directive to block access for the wireless communication device to at least one of the radio access points.

With this embodiment the instruction submitted to the wireless communication device informs the wireless communication device that it is disallowed to camp on at least one depicted radio access point, and in particular it is disallowed to launch a service on that radio access point.

A radio access point is any representative of a radio access network. It may be advantageous in terms of signaling load to only inform that a certain cell belonging to the blocked radio access network is disallowed, in particular the active cell. Advantageously a range of cell, in particular those cells belonging to the disallowed radio access network that are in reach for the wireless communication device, is defined. The cells in reach are in preferably taken from the list of neighbor cells. Alternatively a location, registration or tracking area is defined. This is advantageous when all cells of that radio access network that are in reach for the wireless communication device belong to one of those areas.

In a further preferred embodiment it is suggested a method wherein the wireless communication device further comprising an operating profile including information relating to suitable radio access points, wherein said directive to block access comprises instructions to block only those radio access points not corresponding to said operating profile.

An operating profile is defined by a set of at least two parameters with certain values, indicating the requirements of the wireless communication device. This operating profile may advantageously be stored in a subscription database of the cellular network, which holds all subscription data of the subscribers of the cellular network. In particular the operating profile is stored with data relating to the device domain, the wireless communication device is assigned to. Thus the cellular network looks up upon reception of the request from the wireless communication device the data associated to the requesting wireless communication device.

Alternatively the request from the wireless communication device comprises a reference to the operating profile, and the cellular network only has to look up a reference table stored in the cellular network to identify what parameter values are defined for that operating profile reference.

The operating profile resp. the parameter values are then taken into account for the decision about instructions sent to the wireless communication device. This is in particular advantageous when the operating profile informs about the assignment to a certain device domain, as this information does not have to be looked up from the cellular network.

In a further preferred embodiment the operating profile comprises information relating to at least one of:
- the at least one service supported by said wireless communication device, and/or
- the minimum and/or maximum data throughput envisaged for communication tasks by said wireless communication device.

In that case upon the submission of measurements the cellular network is in the position to decide about instructions for the wireless communication device without a request for a service, and nevertheless can take the envisaged service according to the operating profile into account for the decision.

Should the wireless communication device want to launch a service which is not comprised in the operating profile, it can nevertheless indicate that service according to the embodiment above in the request to the cellular network.

Should more than one accessible radio access networks - the radio access network of the active cell and the radio access network providing a lower technology standard of other cells in reach of the wireless communication device - be able to support the service defined in the operating profile, still the throughput requirements can be used to discriminate between the accessible radio access networks.

According to another preferred embodiment it is suggested a method further comprising the step for the wireless communication device of:
- in absence of instructions received from the cellular network selecting the radio access point:
- suitable for requested service, and
- providing the lowest data throughput.

This embodiment is applicable to wireless communication devices belonging to a certain device domain. Should the cellular network not be able to respond to the request from the wireless communication device, in particular in a certain timeframe, the wireless communication device is enabled to select a radio access point, in particular a cell of a radio access network, which is suitable for the requested service. Opposed to known behavior the wireless communication device consequently selects the radio access point with the lowest data throughput.

A radio access point is suitable for the requested service not only when it is capable to support this service, but also when - in particular according to the operating profile - the required data throughput requirements can be supported. This means when a machine-to-machine device is camped on a 4G cell, and 3G and 2G/GPRS cells are available, it is generally the GPRS cell which is selected. Provided that the data throughout requirements are beyond what the GPRS cell can support, it is then the 3G cell which is selected by the wireless communication device. This behavior is in particular advantageous as with the mentioned common balancing schemes of the cellular networks it is more the radio access networks supporting higher technology standards that are populated with registered wireless communication devices, in particular handsets. With this default embodiment the wireless communication devices assigned to a machine type communication domain would preferably switch to radio access networks of lower technology standards, in particular 2G, as long as those radio access networks are capable to support the desired services.

In another advantageous embodiment it is proposed a method wherein the wireless communication device further comprising an identification unit, comprising at least one memory unit,
and an access interface between said wireless communication device and the memory unit of the identification unit,
wherein the submission of instructions from the cellular network to the wireless communication device comprises the steps of:
- submission of instructions from cellular network to wireless communication device in coded form,
- initiating the identification unit to decode and write data relative to submitted instructions to the memory unit of the identification unit, by means of said access interface,
- reading out the decoded content written to the memory unit by the wireless communication device.

This embodiment suggests another option how to provide the instructions to the wireless communication device. For that the existing path is used which arrives at the identification unit connected to the wireless communication device and which is required for operating in the cellular network, also known as remote SIM access (RSA).

As such, the wireless communication device can provide measurements to the cellular network, and later the cellular network provides instructions via this channel. The wireless communication device is then in a position to request these data from the identification unit.

This embodiment is in particular advantageous for stationary devices where the situation of base nodes in reach does not materially change in a short timeframe. Further, when the cellular network is aware of the envisaged service of the wireless communication device, in particular by means of the operating profile, the instructions will not vary too much. It is therefore advantageous to provide the instructions to the identification unit, and upon request from the wireless communication device submit the instructions to the wireless communication device. The wireless communication device is then informed about the allowed behavior, in particular blocked radio access points.

For the situation of a request of the wireless communication device to the cellular network with measurements deviating from the normal situation, that is in particular that the setting provided to the identification unit would put the successful execution of the service at risk, it is nevertheless foreseen to directly send a response to the wireless communication device with deviating instructions. In particular those instructions incorporate not to block a certain radio access point, which is accessible for the wireless communication device according to the provided measurements, while another radio access point of another radio access network, which would be envisaged by the instructions on the identification unit, is not accessible.

With this option for a mainly static wireless communication device it is assured to continue servicing, even when it is somehow moved. Such a change of measurement situation is preferably an indication for the cellular network to change the instructions provided to the identification unit. With this embodiment it is assured that a usually stationary wireless communication unit which gets moved to another place and remains there stationary, has after a predefined amount of service request appropriate instructions available on the identification unit to comply with.

Alternatively it is suggested according to another embodiment that the cellular network further comprising a channel related to said device domain, comprising the steps of:
- opening said channel from the base node of the active cell to the wireless communication device, and
- submitting said instruction to the wireless communication device by means of said channel.

According to this embodiment the cellular network provides for the communication between the wireless communication device and the cellular network resp. the radio access network a special channel, which allows submission of the instructions. It is preferably a dedicated channel, and it is preferably only accessible or at least populated for wireless communication devices that are assigned to a specific device domain.

According to a second aspect of the invention it is proposed a wireless communication device operating in a cellular network, comprising a plurality of cells, each comprising a base node, further the cellular network comprising an active cell, which is the one of the plurality of cells the wireless communication device is camping on, the cellular network further comprising at least one device domain, said wireless communication device being assigned to said device domain, the wireless communication device is configured to:
- determine measurements related to received signal quality of the base node of at least one cell of the cellular network,
- submit to the base node of the active cell said measurements and a request for a service of the cellular network,
- upon reception of a response from the cellular network comprising an instruction relating to the use of at least one of said radio access network, select a cell for the requested service based on retrieved instruction.

This aspect shares the advantages of the first aspect.

According to a third aspect of the invention it is suggested a cellular network comprising a plurality of cells, each comprising a base node, further an active cell, which is the one a wireless communication device according to the second aspect is currently camping on, the active cell being part of one of two or more radio access networks of the cellular network, the cellular network further comprising at least one device domain and an assignment of registered wireless communication devices to said device domain, the cellular network further comprising a message reception unit, a decision unit, and an instruction submission unit, the cellular network is configured to:
- receive at the message reception unit from the wireless communication device a request for a service, further comprising measurements related to received signal quality of the base node of at least one of the cells,
- submit at the instruction submission unit to the wireless communication device an instruction relating to the use of at least one of said radio access networks, the instruction being based on a decision of the decision unit, wherein the decision is at least based on:
- the device domain the wireless communication device is assigned to, and
- the measurements received from the wireless communication device.

The second aspect shares the advantages of the previous aspects. It is preferably proposed that the cellular network further comprises at least one radio access point related to a radio access network, wherein said instruction comprises a directive to block access for the wireless communication device to at least one of the radio access points.

According to that it is the cellular network which mandatorily decides for the requesting wireless communication device, which radio access networks relating to the radio access points is usable for the wireless communication device. Preferably the instructions are provided to the wireless communication device by way of another preferred embodiment. According to that it is proposed that the cellular network further comprising a channel related to said device domain, the cellular network is configured to:
- open said channel from the base node of the active cell to the wireless communication device, and
- submit said instruction to the wireless communication device by means of said channel.

This invention advantageously solves the problem of balancing the load of a cellular network between different radio access networks for wireless communication devices not behaving like mobile handsets, combined assuring that each of said wireless communication device is able to perform its dedicated service whenever it needs to. In effect radio access networks which are sufficient to fulfill the servicing needs, in particular those represented by the operating profile, are more likely populated with the machine type communication wireless communication units. This leads to a better use of the available network resources, in particular for the older and still maintained radio access networks supporting lower technology standard like 2G.

### BRIEF DESCRIPTION OF THE DRAWINGS

The following description and the annexed drawings set forth in detail certain illustrative aspects and are indicative of a few of the various ways in which the principles of the embodiments may be employed. Other characteristics and advantages of the present invention will appear when reading the following description and annexed drawings of advantageous embodiments given as illustrative but not restrictive examples.
- FIG. 1: represents the wireless communication device and units of the cellular network of the type to which the present invention is applied as an embodiment;
- FIG. 2: shows an overview of different wireless communication devices positioned in relationship to cells of the cellular network;
- FIG.3: shows a flow diagram representing a first advantageous embodiment of the inventive method from the wireless communication device's perspective;
- FIG.4: shows a flow diagram representing a second advantageous embodiment of the inventive method from the cellular network's perspective.

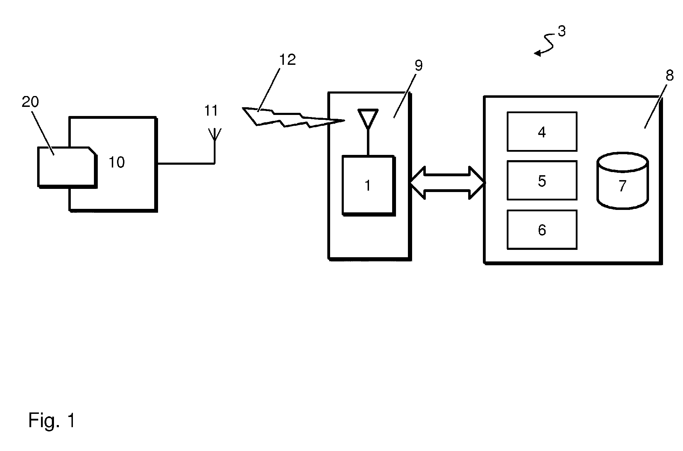

FIG. 1 schematically shows a wireless communication device 10 of the type to which the present invention is applied as an embodiment. The wireless communication device 10 is any type of device configured to be operated in a cellular network 3, in particular supporting e.g. 2G, 3G and/or 4G technology standards, like GSM, GPRS, EDGE, UMTS, LTE. Typically such wireless communication device 10 encompasses mobile handsets but also devices known as machine-to-machine (M2M) devices like asset tracker, metering devices or vending machines. Such M2M devices have in common that they are only rarely actively communicate in the cellular network 3 with remote devices but expect to be served by the cellular network 3 when it is requested.

The wireless communication device 10 according to this embodiment is further connected to an identification unit 20, which is in particular a SIM card, an UICC or a machine type identification module (MIM). Only the latter is known as being not removable.

With the identification unit 20 the wireless communication device 10 is able to register within the cellular network 3, provide its access credentials and after confirmation from the cellular network 3 operate therein. The identification unit 20 is preferably provided by the home network operator of the cellular network 3 and comprises a secured environment in order to prevent fraud in the field. As such it allows the cellular network 3 the access to memory units on the identification unit 20 even during runtime in the field, that is when it is connected to the wireless communication device 10.

Further the wireless communication device 10 comprises an antenna 11 for physical access to the radio waves on the air interface 12 between the wireless communication device 10 and at least one base node 1 of a radio access network 9 of the cellular network 3. Depending on the type of device the wireless communication device 10 is in a preferred embodiment composed of an appliance unit in combination with a communication unit. The communication unit preferably is designed as an machine-to-machine (M2M) or wireless module which brings all components necessary for wireless communication, including baseband chips, protocol stack, clock and high frequency radio units. The communication unit is connected to the wireless communication device 10 by means of a physical, preferably soldered connection and logically by a command interface, in particular the AT-interface. The AT-interface is known for allowing controlling of modems in the world of communication.

The appliance unit provides all logical device specific functions, in particular a user interface if required or the logic when to communicate with remote devices, e.g. in case of incoming communication like a SMS or a call.

The cellular network 3 comprises of at least one base node 1. The base node 1 is the physical interface to the air interface 12 to the wireless communication devices which are supposed to operate within the cellular network 3. Depending on the technology standard of the radio access network the base node is assigned to, the base node is a base node, a nodeB oder an enodeB. Each base node covers at least one cell, that is a geographical area which can be reached with the radio signals of the base node 1 and where the radio signals from wireless communication devices situated within this cell can be decoded by the base node 1.

The cellular network 3 provides depending on the supported technology standards further components, e.g. RAN, RNC etc. A cellular network 3 of a network operator provides typically more than one radio access networks 9 supporting different technology standards, like a 2G radio access network and a 3G radio access network. Each cell is assigned to a radio access network 9. Each of the plurality of supported radio access networks 9 has its own components, but they also have components in common. This is in particular the case in order to allow the communication between wireless communication devices 10 operating in the separate radio access networks 9, but also to allow the cellular network 3 to balance the traffic load in the single radio access networks 9. All this central operations are in a preferred embodiment executed in the core network 8 of the cellular network 3. Thereby the cellular network 3 comprises at least two radio access networks (RAN) and the core network 8.

The core network 8 further comprises a subscription database 7 for storing the subscription data of all subscribers. The subscription database 7 is preferably implemented as home location register (HLR).

Additionally the subscription database 7 - or at least a database associated to the subscription database 7 - is configured to hold information relating to device domain associations. With such device domains it is foreseen to associate a certain amount of subscribers to a specific behavior type. Cellular networks 3 were originally designed for mobile handset users, and the networks operators have decades of experience how to handle this. Through the upcoming machine-to-machine communication more and more subscribers of this type are populating the cellular networks. Their behavior is completely different and can merely be handled by the cellular networks in the same manner as mobile handsets. To distinguish such wireless communication devices 10 said device domains were introduced, which are in the simplest way implemented as a special entry in the subscriber database 7 for each subscriber assigned to that device domain. More elaborate ways of creating the device domain and the association of subscribers to the device domain are also covered with present invention. The cellular network 3 - resp. in presently shown embodiment the core network 8 of the cellular network 3 - further comprises units dedicated for implementing the invention.

The first unit is the message reception unit 4. The message reception unit 4 is configured to receive a request from a wireless communication device 10 comprising a request for a service and measurements related to signal quality of base nodes 1 in proximity of the wireless communication device 10. Typically dedicated logical channels on the air interface 12 between base node 1 and wireless communication device 10 are established and so the incoming request is routed to the message reception unit 4. The message reception unit 4 preferably forwards the received request to the decision unit 5.

The decision unit 5 is configured to decide for each requesting wireless communication device how it is supposed to behave in the cellular network 3 and/or which radio access network 9 is to take. For doing so the decision unit 5 accesses the subscription database 7, in particular in order to figure out if the requesting wireless communication device 10 and its associated subscription are associated to a device domain.

Once the decision unit 5 decides about the supposed behavior of the requesting wireless communication device 10, it advises the instruction submission unit 6 to send a response to the wireless communication device 10 with instructions for said supposed behavior.

The instruction submission unit 6 makes in particular use of a dedicated logical channel for submitting respective instruction as a response message. There are certain ways to physically implement said units 4, 5, 6, in particular one controlling server might run software modules or libraries dedicated to the single tasks, alternatively one or more of the units is covered in different servers and the units are interlinked through signaling channels of the core network 8 resp. the cellular network 3 or the radio access networks 9.

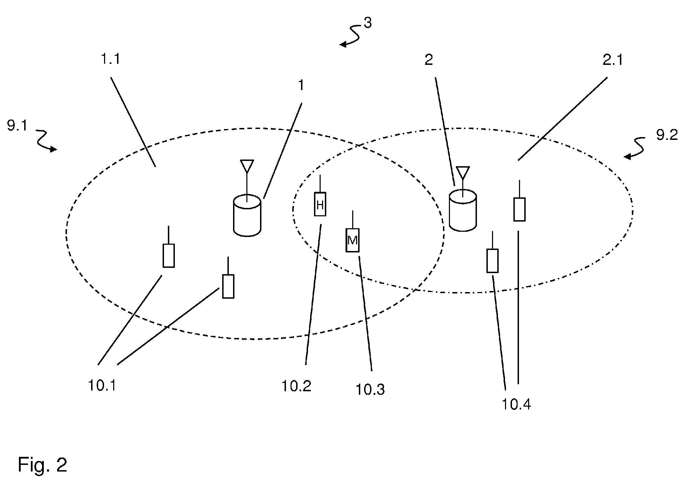

In FIG. 2 are shown various situations of wireless communication devices 10.1-4 operating in conjunction with base nodes 1, 2 belonging to one or more radio access networks 9.1, 9.2.

Two base nodes 1, 2 are situated in a geographical area. Base node 1 belongs to radio access network 9.1 of a network operator and base node 2 belongs to radio access network 9.2 of the same network operator. Radio access network 9.1 is of higher technology standard than radio access network 9.2, e.g. 4G vs. 3G.

Each base node 1, 2 covers a certain geographical area known as cell 1.1, 2.1, where the dotted and dash-dotted lines show the border of accessibility: a wireless communication device 10 situated outside a cell 1.1, 2.1 is not able to communicate with the base node 1, 2.

In this geographical area a total of six wireless communication devices 10.1-4 are visible, with 4 different scenarios.

Wireless communication devices 10.1 are only situated within the cell 1.1 serviced by base node 1. Should the wireless communication device 10.1 request a service from the radio access network 9.1, the wireless communication device 10.1 would only be able to successfully communicate with cell 1.1, as no other cell is in reach. Cell 1.1 is for these wireless communication devices therefore the active cell.

The same is true for the wireless communication devices 10.4, which are situated within cell 2.1. Upon a request the wireless communication devices 10.4 have to remain in cell 2.1 in order to successfully communicate according to the requested service.

Wireless communication devices 10.2 and 10.3 are situated in a geographical area which is in reach both for base nodes 1 and 2. It is assumed that both wireless communication devices 10.2, 10.3 are camping on cell 1.1, that means they are connected via base node 1 to the radio access network 9.1 providing a higher technology standard.

In this embodiment wireless communication device 10.2 is a mobile handset, whereas wireless communication device 10.3 is a machine-to-machine (M2M) device. The latter is assigned to the device domain dedicated for M2M devices.

Wireless communication device 10.3 is now supposed to request for a service which is both supported by base node 1 and base node 2, e.g. a phone call or an IP connection. For doing so it provides the information regarding the requested service and measurements regarding visible base nodes to the radio access network 9.1, and as such to the decision unit 5 of the core network 8. Upon reception of that request through the message reception unit 4, the decision unit 5 retrieves from subscription database 7 the information if the requesting wireless communication device 10.3 is assigned to a device domain, in particular the M2M device domain. Based on further parameters, in particular the load of cell 1.1 in terms of traffic or camping wireless communication devices, the decision unit decides that wireless communication device 10.3 is instructed to execute the requested service after a reselection to base node 2 of cell 2.1 of lower technology standard radio access network 9.2, rather than to continue with the current cell 1.1.

Should handset 10.3 request for the same service, the decision unit 5 would according to the missing assignment to a specific device domain remain this handset in the current cell 1.1.

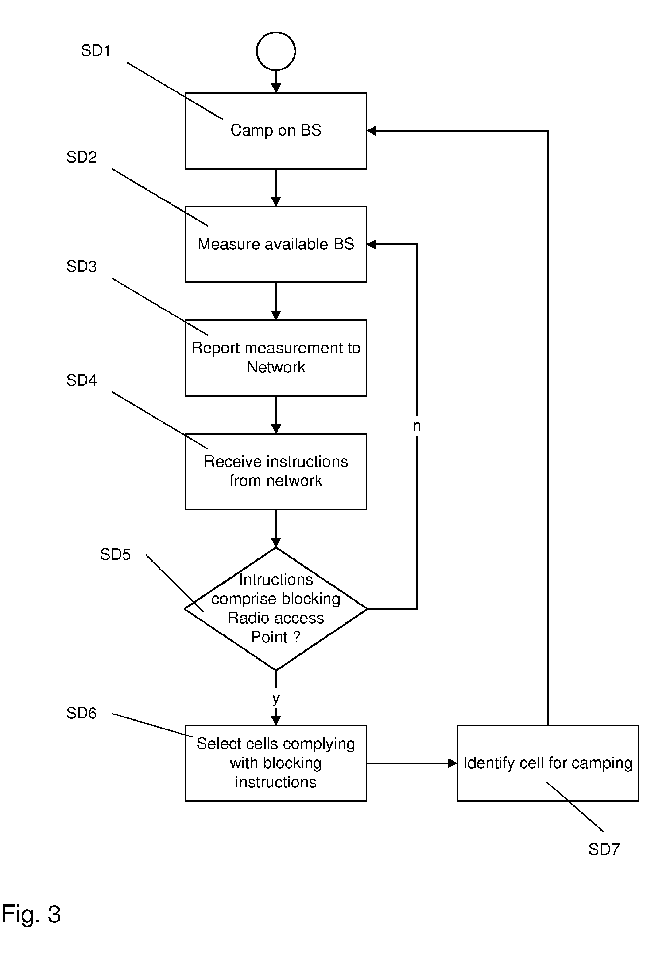

How this described process is handled in detail is shown in FIG.s 3 and 4. FIG. 3 shows the steps according to a preferred embodiment of the inventive method from the perspective of the wireless communication device 10. It starts in step SD1 wherein the wireless communication device 10 is camping on a base node (BS) of cell 1.1, which is called the active cell. In the next step SD2 - either regularly or in preparation of a coming service request - the wireless communication device 10 conducts measurements of receivable base nodes 1, 2. Such measurements can be restricted to a simple power measurement of certain channels, e.g. of a pilot channel. Further measurements, in particular those specific to the technology standard of the envisaged base node, are also encompassed. In particular it is foreseen that it is analyzed the list of neighbor cells received from the active cell. The wireless communication device 10 consequently iterates through this list and tries to decode signals from each of the base node on the list, and to conduct appropriate measurements. These measurements are eventually stored, at least in a volatile memory, before they are used in the next step.

In step SD3 the measurements are provided to the radio access network 9.1 of the active cell by submitting them via a dedicated signaling to base node 1. Preferably this submitting of measurements is accompanied by a request for a service, but it is also foreseen to be done independently or even with a certain time gap to a separate service request. For stationary devices it is even foreseen to rarely submit the measurements to the radio access network 9.1, as it is expected - at least for some technologies and measurements - that these values do not materially vary for a stationary device.

In step SD4 the wireless communication device 10 receives from the radio access network 9.1 instructions for servicing. These instructions are in a first embodiment submitted in response to a service request in step SD3, either including said measurements or independent thereof. In a second embodiment the instructions are received independent of a service request, that means that a later service request would be unaffected by those instructions. It is in particular advantageous to provide said instructions on a special channel which is established in order to provide such instructions, in particular to wireless communication devices being part of a specific device domain.

In step SD5 it is after receiving the instruction tested in the wireless communication device 10, if the instructions comprise any indication regarding a blocking of a radio access point. A radio access point is a representative of a radio access network 9. Such a radio access point can be a cell 1.1, 2.1 or a group of cells, in particular one or more of those in the near proximity of the wireless communication device 10, in particular the active cell. In case of more than one cell form a radio access point, they belong to the same radio access network. It further can be a location area, routing area or tracking area of the radio access network 9, in particular such area where the active cell is belonging to. Finally the radio access point can also comprise the whole radio access network 9.

If the test reveals in steps SD5 that no blocking instruction is received, the wireless communication device 10 can proceed as before. Otherwise it jumps to step SD6, and out of the list of cells the wireless communication device 10 is able to register to, in particular taking into account the measurements of step SD2, those cells are removed who are blocked according to the received instructions.

Should the active cell be part of the blocked cells, then in step SD7 the wireless communication device 10 needs to identify a new cell 2.1 for camping on. As a matter of fact, the inventive method assures that despite blocking instruction the wireless communication device 10 has at least one remaining cell which is appropriate for the envisaged service. Consequently the wireless communication device 10 ceases the camping on active cell 1.1 and changes to the newly identified cell 2.1 back in SD1.

Methods to select a cell for a wireless communication device 10 are defined in the respective technology standards and can be applied.

After camping on cell 2.1 now the wireless communication device 10 is able to launch the requested service, e.g. a voice call, an IP connection or whatever is available and requested.

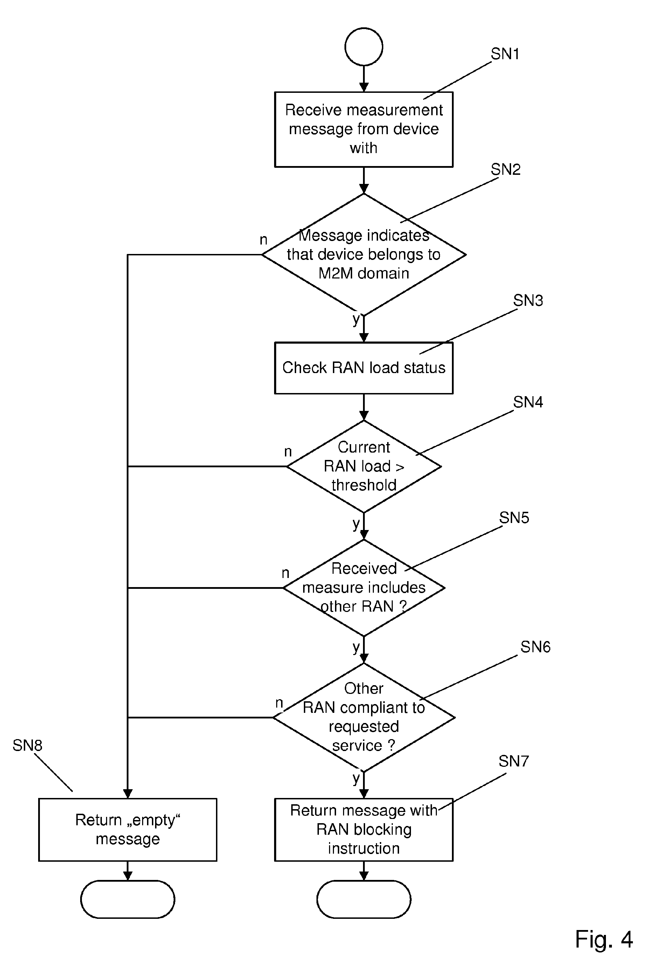

FIG. 4 shows from the perspective of the cellular network 3 resp. the core network 8 an embodiment of the inventive method. The order of steps is specific to this embodiment, other orders are in fact also covered by the invention.

The procedure starts in step SN1 with the reception of a message from the wireless communication device at the message reception unit 4, in particular a message alike that from step SD3 in FIG. 3. In particular the message comprises an indication regarding a service to be requested. This is in particular true when a service request is accompanied by measurement information. The message is forwarded from the message reception unit 4 to the decision unit 5 for a decision what instructions are submitted to the requesting wireless communication device.

In step SN2 it is first tested in the decision unit 5 if the requesting wireless communication device 10 is assigned to a device domain, where this procedure is valid for. This test is either done by reading information relating to a device domain assignment from subscription database 7, or this information is already submitted in connection with the request from the wireless communication device 10.

Should the wireless communication device 10 not belong to a device domain, the process is already finished, it branches then to step SN8. This is the normal response for devices not belonging to a device domain, in particular handsets. Consequently a normal response with empty instruction field, or no response at all can be submitted to the requesting wireless communication device 10.

If the wireless communication device 10 is identified as assigned to the device domain, now the cellular network 3 checks the load status of the radio access networks 9.1, 9.2 in step SN3. The load status can be any metrics regarding the amount of devices camping on the cell or the radio access network 9, the amount of traffic, the percentage of available cell resources used for the currently camping devices, the measured energy in the band used for connection to the base nodes or the like.

In step SN4 it is contested if the load status exceeds a predefined threshold. If not, no further action is required and the process can again branch to step SN8.

If the threshold is exceeded, it is then checked if the measurements received from the wireless communication device in step SN1 also comprises measurements of cells of another radio access network 9.2. Only if this is the case the process proceeds, otherwise it jumps again to step SN8, as there is currently not possibility for this wireless communication device 10 to mitigate the situation, despite the high load status. The latter is the situation for a wireless communication device 10.1 in FIG. 2, that means no cell of another radio access network is in reach. Effectively the wireless communication device has to maintain its camping on the currently active cell 1.1.

If cells of other radio access networks are available, that means measurements were provided and show that at least one of these cells is able to be decoded by the requesting wireless communication device, it is then checked in step SN6, if at least one of these cells of another radio access networks is compliant to the requested service. In particular a pure GSM network would not be possible to provide an IP connection. With higher radio access networks like LTE, further services like IMS etc. are defined. Lower technologies would not be able to provide those services, hence a wireless communication device requesting that type of service had to remain camped on the LTE cell.

If at least one cell of another radio access networks is found in step SN7 to support the requested service then in step SN7, there is a possibility to switch to the respective radio access network. In any case it is selected the radio access network supporting the requested service supporting the lowest technology standard, that is 2G rather than 3G or 4G and 3G rather than 4G. Once the destination radio access network is identified an instruction is created which instructs the wireless communication device to block at least the radio access point of the radio access network 9.1 of the currently active cell 1.1. The instruction is sent to the requesting wireless communication device 10 by means of the instruction submission unit 6.

In a further preferred embodiment it is further foreseen that for the wireless communication device it is defined an operating profile. The operating profile describes a set of at least two parameters describing the capabilities and requirements of the wireless communication device. Preferably different wireless communication devices with the same parameter set share the same operating profile, which is advantageously identified by a reference. Additionally those operating profiles are defined by the cellular network 3. This assignment to an operating profile may further be part of the device domain, so that it only affects wireless communication devices 10.1-4 assigned to the specific device domain. In a simple example the operating profile of a wireless communication device can comprise the two values device domain and service requirement. A machine-to-machine device would include the information relating to the machine-to-machine device domain assignment. Metering devices would have in the service requirement field only the information regarding IP connections, that is no voice requirement.

It is then checked in step SN6 in conjunction with the service check rather than to compare the requested service instead to check if the envisaged cells or the radio access network 9.1 complies with the operating profile of the requesting wireless communication device 10. For that the decision unit 5 needs to know the operating profile of the requesting wireless communication device 10. This is either possible by sending an indication of the operating profile with the request, or by storing such information with the subscription information in the subscription database 7. Using the operating profile relieves the wireless communication devices 10 from sending continuously the same data with a certain request and further reduces the signaling load in the current radio access network, which was already one of the goals of this invention.

From the foregoing it becomes apparent that the presented method and apparatuses solve the envisaged goal to overcome the disadvantages of the solutions known in the art, and it provides a robust mechanism for balancing interaction between wireless communication devices of a device domain in radio access networks assigned to the cellular network of a network operator.

## Claims

1. Method for operating a wireless communication device (10) in a cellular network (3), comprising a plurality of cells (1.1, 2.1), each comprising a base node (1, 2),
the cellular network (3) further comprising an active cell (1.1), which is the one of the plurality of cells (1.1, 2.1) the wireless communication device (10) is camping on, the active cell (1.1) being part of one of two or more radio access networks (9) of the cellular network (3),
the cellular network (3) further comprising at least one device domain, and an assignment of registered wireless communication devices to said device domain, said wireless communication device (10) being assigned to said device domain, the method comprising the steps for the wireless communication device (10) of:
- determining measurements related to received signal quality of the base node (1, 2) of at least one cell (1.1, 2.1) of the cellular network (9),
- submitting to the base node (1) of the active cell (1.1) said measurements and a request for a service of the cellular network (3),
the method further comprising the steps for the cellular network (3) of:
- submitting to the wireless communication device (10) an instruction relating to the use of at least one of said radio access network (9), the instruction being at least based on:
- the device domain, the wireless communication device (10) is assigned to and
- the measurements received from the wireless communication device (10), further at the wireless communication device (10):
- selecting after reception of said instruction a cell for the requested service, based on received instruction.

2. Method according to claim 1,
wherein the instruction is further based on at least one out of
- type of the requested service,
- the service capabilities of the radio access network (9) of the active cell, and/or
- the service capabilities of at least one cell being part of a radio access network (9) different from the radio access network (9) of the active cell (1.1).

3. Method according to at least one of the claims 1 or 2,
the cellular network (3) further comprising at least one radio access point related to a radio access network (9),
wherein said instruction comprises a directive to block access for the wireless communication device (10) to at least one of the radio access points.

4. Method according to claim 3,
the wireless communication device (10) further comprising an operating profile including information relating to suitable radio access points,
wherein said directive to block access comprises instructions to block only those radio access points not corresponding to said operating profile.

5. Method according to claim 4,
wherein the operating profile comprises information relating to at least one of:
- the at least one service supported by said wireless communication device (10), and/or
- the minimum and/or maximum data throughput envisaged for communication tasks by said wireless communication device (10).

6. Method according to at least one of the previous claims,
further comprising the step for the wireless communication device (10) of:
- in absence of instructions received from the cellular network (3) selecting the radio access point:
- suitable for requested service, and
- providing the lowest data throughput.

7. Method according to one of the previous claims,
the wireless communication device (10) further comprising an identification unit (20), comprising at least one memory unit,
and an access interface between said wireless communication device (10) and the memory unit of the identification unit (20),
wherein the submission of instructions from the cellular network (3) to the wireless communication device (10) comprises the steps of:
- submission of instructions from cellular network (3) to wireless communication device (10) in coded form,
- initiating the identification unit (20) to decode and write data relative to submitted instructions to the memory unit of the identification unit (20), by means of said access interface,
- reading out the decoded content written to the memory unit by the wireless communication device (10).

8. Method according to at least one of the claims 1 to 6,
the cellular network (3) further comprising a channel related to said device domain,
comprising the steps of:
- opening said channel from the base node (1) of the active cell (1.1) to the wireless communication device (10), and
- submitting said instruction to the wireless communication device (10) by means of said channel.

9. Wireless communication device (10) operating in a cellular network (3), comprising a plurality of cells, each comprising a base node (1), further the cellular network (3) comprising an active cell (1.1), which is the one of the plurality of cells the wireless communication device (10) is camping on,
the cellular network (3) further comprising at least one device domain, said wireless communication device (10) being assigned to said device domain, the wireless communication device (10) is configured to:
- determine measurements related to received signal quality of the base node (1, 2) of at least one cell (1.1, 2.1) of the cellular network (3),
- submit to the base node (1) of the active cell (1.1) said measurements and a request for a service of the cellular network (3),
- upon reception of a response from the cellular network (3) comprising an instruction relating to the use of at least one of said radio access network (9), select a cell for the requested service based on retrieved instruction.

10. Wireless communication device (10) according to claim 9,
further comprising an operating profile including information relating to suitable radio access points,
wherein said instructions relating to the use of at least one of said radio access networks (9) comprises instructions to block those cells not corresponding to said operating profile.
wherein the operating profile relates to at least one of:
- the at least one service supported by said wireless communication device (10), and/or
- the minimum and/or maximum data throughput envisaged for communication tasks by the wireless communication device (10).

11. Wireless communication device (10) according to at least one of the claims 9 or 10,
the wireless communication device (10) is further configured to:
- in absence of instructions received from the cellular network (3) select the radio access point:
- suitable for the requested service and
- providing the lowest data throughput.

12. Cellular network (3) comprising a plurality of cells (1.1, 2.1), each comprising a base node (1, 2), further an active cell (1.1), which is the one of the plurality of cells a wireless communication device (10) according to claim 9 is currently camping on,
the active cell (1.1) being part of one of two or more radio access networks (9) of the cellular network (3),
the cellular network (3) further comprising at least one device domain and an assignment of registered wireless communication devices to said device domain,
the cellular network (3) further comprising a message reception unit (4), a decision unit (5), and an instruction submission unit (6),
the cellular network (3) is configured to:
- receive at the message reception unit (4) from the wireless communication device (10) a request for a service, further comprising measurements related to received signal quality of the base node (1, 2) of at least one of the cells (1.1, 2.1),
- submit at the instruction submission unit (6) to the wireless communication device (10) an instruction relating to the use of at least one of said radio access networks, the instruction being based on a decision of the decision unit (5),
wherein the decision is at least based on:
- the device domain the wireless communication device (10) is assigned to, and
- the measurements received from the wireless communication device (10).

13. Cellular network (3) according to claim 12,
wherein the decision is further based on at least one out of:
- type of the requested service, and/or
- the service capabilities of the radio access network (9) of the active cell (1.1).

14. Cellular network (3) according to at least one of the claims 12 or 13,
wherein the cellular network (3) further comprises at least one radio access point related to a radio access network (9),
wherein said instruction comprises a directive to block access for the wireless communication device (10) to at least one of the radio access points.

15. Cellular network (3) according to at least one of the claims 12 to 14, further comprising a channel related to said device domain,
the cellular network (3) is configured to:
- open said channel from the base node (1) of the active cell (1.1) to the wireless communication device (10), and
- submit said instruction to the wireless communication device (10) by means of said channel.
